# EUROPEAN PATENT APPLICATION

(11) **EP 1 176 830 A1**
(43) Date of publication of application: **30.01.2002**
(21) Application number: 01305362.4
(22) Date of filing: 20.06.2001
(51) Int. Cl.: H04N 7/26, H04N 7/50, H04N 7/18, H04N 5/262, H04N 7/15

(54) **Improved processing apparatus, image recording apparatus and image reproduction apparatus**

(30) Priority: 04.07.2000 JP 2000202255
(71) Applicant: TEAC CORPORATION, Musashino-shi Tokyo (JP)
(72) Inventor: Yamaguchi, Hirohisa, Tokyo (JP); Wakamiya, Masanori, Fussa-shi, Tokyo (JP)
(74) Representative: Rees, Alexander Ellison

(57) **Abstract**

An image processing device (10) has an image composition component (14) that combines a plurality of image signals to obtain a single composite image signal, and an image compression coding component (16) that compresses and encodes the single composite image signal so as to obtain a compression coded image signal.

## Description

### BACKGROUND OF THE INVENTION

### 1. Field of the Invention

The present invention relates generally to an image processing apparatus, an image recording apparatus and an image reproduction apparatus, and more particularly, to an improved image processing apparatus, image recording apparatus and image reproduction apparatus employing an image processing technique that compresses a plurality of image signals into a single composite image.

### 2. Description of the Related Art

A security camera recorder system that records video images from, for example, security and surveillance cameras, typically employs a method in which images from a plurality of cameras are stored in a given sequence in a memory bank, a single frame is formed from the respective images of each of the cameras, the image so formed is compressed using the so-called JPEG (Joint Photographic Experts Group) standard, and the compressed images are stored in a storage/recordation unit such as a VCR or hard disk.

In order to further an understanding of the background art and hence the innovativeness of the claimed present invention, a more detailed description will now be given of a conventional security camera recording system and the conventional recording method employed therein.

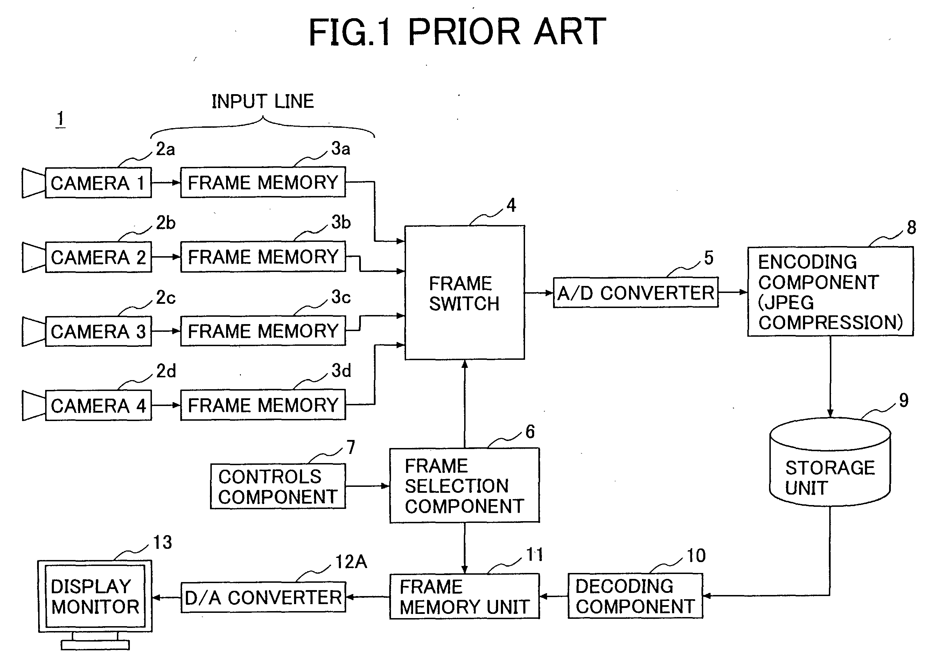

FIG. 1 is a block diagram of a conventional security camera recording system.

As shown in the diagram, in this instance a security camera recorder 1 is connected to four different surveillance cameras 2a, 2b, 2c and 2d (hereinafter 2a-2d), the four surveillance cameras 2a-2d being positioned to photograph a target image from different points and angles.

The images acquired by the cameras 2a-2d each form an independent single frame (one frame), with each such frame being stored, frame by frame, in the frame memory banks 3a, 3b, 3c and 3d (hereinafter frame memory banks 3a-3d).

The images stored in the frame memory 3a-3d (that is, the image signals) are input to an A/D converter 5 while being switched by a frame switch 4.

In this instance, the input line, that is, the sequence, of the image signals read out from the frame memory banks 3a-3d is controlled by a control signal supplied from the frame switch 4 from a frame selection component 6.

Purely for purposes of illustration, assume, for example, a case in which the frame selection component 6 is set so as to record all the images from all the cameras 2a-2d. The frame switch 4 then switches the input to the A/D converter 5 (the so-called input line) so as to follow the sequence camera 2a → camera 2b → camera 2c → camera 2d, so that image signals are read out in order from the frame memory banks 3a-3d.

Or, in a case in which the frame selection component is set so as to record images from camera 2a, camera 2c and camera 2d, the frame switch 4 sets the input to the A/D converter (the input line) so as to follow the sequence camera 2a → camera 2c → camera 2d → camera 2a, so that image signals are read out in order from the memory 3a-3d.

It should be noted that by changing the settings of the controls component 7, the control signals of the frame selection component using the control signals supplied from the controls 7 in turn controls the frame switch 4, so the order in which the image signals are read out from the memory 3a-3d can be changed at will.

The image signals input into the A/D converter 5 via the frame switch 4 are then supplied to an encoding component 8, which compresses the images so supplied using the JPEG (Joint Photographic Experts Group) standard, after which the compressed images are stored in a storage unit 9.

When the stored images are to be read (that is played back, or, in other words, reproduced; hereinafter reproduced), the encoded image signals read out from the storage unit 9 are decoded by a decoding component 10 and stored in the frame memory unit 11. At this point a desired frame can then be called up from the frame memory unit 11 so as to be viewed by the frame selection component 6 using the controls 7, with the appropriate image signals being read out, converted by a D/A converter 12A and displayed on the display monitor 13.

A disadvantage of the above-described conventional recording and reproduction method is as follows.

Specifically, the above-described JPEG standard encoding component 8 employed by the security camera recorder 1 can efficiently reduce the amount of information required for still-image processing and even for moving-image processing using frame-internal predictive coding, because it converts secondary image information into the frequency band and is given an energy bias and carries out quantification and entropy encoding according to that bias.

However, such a set-up is inadequate for efficiently recording moving pictures, which require the processing of relatively large amounts of information.

Accordingly, a different method of compressing moving pictures known as the MPEG (Moving Pictures Expert Group) standard has been put forward, and has gradually begun to be adopted for use with security camera recorders as well.

In the MPEG standard, an inter-image (that is, an inter-frame) moving vector is detected and the image compressed while being interpolated using that moving vector. As a result of such interpolation, however, the degree of correlation between frames becomes vitally important.

However, because the conventional security camera recorder employs a recording method that switches among a plurality of camera images, there is little correlation between frames of differing image signals.

As a result, even under the MPEG standard of compression coding for image data, it is impossible to obtain an inter-frame moving vector. Accordingly, each image signal is compressed as is, with a consequent deterioration in compression efficiency.

### SUMMARY OF THE INVENTION

Accordingly, it is an object of the present invention to provide an improved and useful improved image processing apparatus, image recording apparatus and image reproduction apparatus in which the above-described disadvantage is eliminated.

The above-described objects of the present invention are achieved by an image processing apparatus having an image composition component that combines a plurality of image signals to obtain a single composite image signal and an image compression coding component that compresses and encodes the single composite image signal to obtain a compression coded image signal.

According to this first aspect of the invention, the plurality of image signals are given a high degree of correlation between successive frames of the composite image signal, which is preferable for compression coding, and in particular, is more preferable for use with the MPEG standard for compression coding of image data.

It is preferable that the above-described image processing apparatus also include an editing component that supplies editing control signal to the image composition component in order to edit the plurality of image signals.

Additionally, it is preferable that the image composition component comprise a plurality of memory components for storing each of the plurality of image signals, an image signal switching component for selectively switching the image signals to be input into the plurality of memory components, a read control component that supplies a read control signal to the plurality of memory components so as to read out image signals stored therein, and an image processing component for processing the image signals read out from the plurality of memory components using the editing control signal from the editing component. Additionally, it is preferable that the read control component supplies a read clock signal to the plurality of memory components using the editing control signal from the editing component, the read clock signal corresponding to a multiple of the plurality of image signals needed to obtain the composite image signal.

### BRIEF DESCRIPTION OF THE DRAWINGS

These and other objects, features, aspects and advantages of the present invention will become better understood and more apparent from the following description, appended claims and accompanying drawings, in which:
FIG. 1 is a block diagram of a conventional security camera;
FIG. 2 is a block diagram of a security camera recorder according to one embodiment of the present invention;
FIGS. 3A and 3B are diagrams illustrating a first sample composite image edited using one embodiment of the present invention, in which FIG. 3A shows the composite image formed by image signals of individual cameras and FIG. 3B shows a timing chart of same;
FIGS. 4A and 4B are diagrams illustrating a second sample composite image edited by one embodiment of the present invention, in which FIG. 4A shows the composite image formed by image signals of individual cameras and FIG. 4B shows a timing chart of same;
FIGS. 5A and 5B are diagrams illustrating a third sample composite image edited by one embodiment of the present invention, in which FIG. 5A shows the composite image formed by image signals of individual cameras and FIG. 5B shows a timing chart of same; and
FIGS. 6A and 6B are diagrams illustrating a fourth sample composite image edited by one embodiment of the present invention, in which FIG. 6A shows the composite image formed by image signals of individual cameras and FIG. 6B shows a timing chart of same.

### DETAILED DESCRIPTION OF THE INVENTION

A detailed description will now be given of an improved optical disk recording apparatus according to the present invention, with reference to the accompanying drawings and taking a security camera recorder as an example of an application thereof for purposes of illustration only. It should be noted that identical or corresponding elements are given identical or corresponding reference numbers in all drawings, with detailed descriptions thereof given once and thereafter omitted.

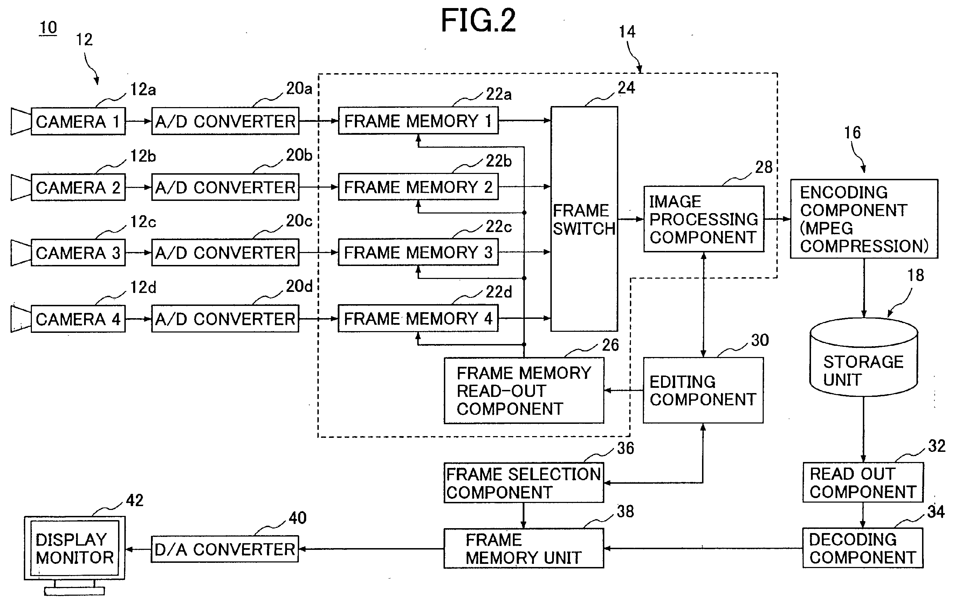

FIG. 2 is a block diagram of a security camera recording system according to one embodiment of the present invention.

As shown in FIG. 2, a security camera recording system 10 according to one embodiment of the present invention comprises a recording component (image recording apparatus) and a reproduction component (image reproduction apparatus). Generally, the recording component comprises one or more camera units 12, an image composition apparatus 14, an encoding component (image compression coding component) 16, and a storage component (image recording component) 18 as a recording apparatus.

In the present embodiment, the camera unit 12 is composed of four surveillance cameras 12a-12d.

The analog image signal of each of the cameras 12a-12d is digitized by A/D converters 20a-20d provided one for each camera 12a-12d and supplied to the image composition apparatus 14.

The image composition apparatus 14 comprises frame memory components 22a-22d, provided one for each of the cameras 12a-12d for the purpose of storing the image signals from the respective cameras 12a-12d one frame at a time; a frame switch 24 for switching the order in which the image signals are input to an image processing component 28 to be described later; a frame memory read-out component 26 for controlling the read-out from the frame memory components 22a-22d; and an image processing component 28 for adjusting the resolution of the composite image obtained from the individual image signals read out from the frame memory components 22a-22d.

Additionally, the security camera recording system 10 is further equipped with an editing component 30. The editing component 30 supplies a read clock signal and a read enable signal to the frame memory components 22a-22d so as to control the frame memory output gate, thus controlling the frame memory read-out component 26. Additionally, the editing component 30 also supplies control signals to the image processing component 28 using image editing information such as the size of the composite image and the sizes of the individual images that form the composite image.

The composite image signal formed by the image composition apparatus 14 described above is supplied to what is in this case an MPEG standard encoding component 16. After the image signal so supplied is converted into a compression coded image signal it is recorded on a recording medium (not shown in the drawing) of the storage unit 18.

The reproduction component comprises a read-out component 32 (that is, a reproduction component) that reads the compression coded image signal from the recording medium of the storage unit 18, a decoding component 34 that decodes the compression coded image signal, a frame selection component 36 (that is, an image selection component) that writes an arbitrarily selected image signal to the frame memory component, a frame memory unit 38 (that is, a selected image signal storage component), a D/A converter 40, and a display monitor 42 (that is, an output component).

A description will now be given of the operation of the security camera recording system 10, and specifically, of first the recording operation and then the reproduction operation.

As an initial matter, it should be noted that the individual cameras 12a-12d are positioned at different locations and photograph an image from different angles.

The analog image signals from each of the cameras 12a-12d are digitized by the corresponding A/D converters 20a-20d and written to the corresponding frame memory components 22a-22d, where they are stored.

The editing component 30 sets editing parameters for the composite image to be recorded in the storage unit 18. That is, the editing component selects the image signals from each of the cameras 12a-12d and supplies control signals to the frame memory read-out component 26 that control the order in which the image signals so selected are input. Then, based on the control signals from the editing component 30, the frame memory read-out component 26 opens predetermined frame memory components 22a-22d output gates and generates a read clock (read clock signal). In so doing, selected image signals are supplied to the image processing component 28 via the frame switch 24. The read clock rate can be changed as necessary by changing the composite image editing parameters, a point which will be described later.

The image processing component 28 is supplied with control signals based on image editing information such as the size of the composite image from the editing component and the size of the individual images that form the composite image so as to obtain a predetermined composite image signal.

The composite image signal is then supplied to the encoding component 16 and converted into a compression coded image signal, after which it is recorded in the storage unit 18.

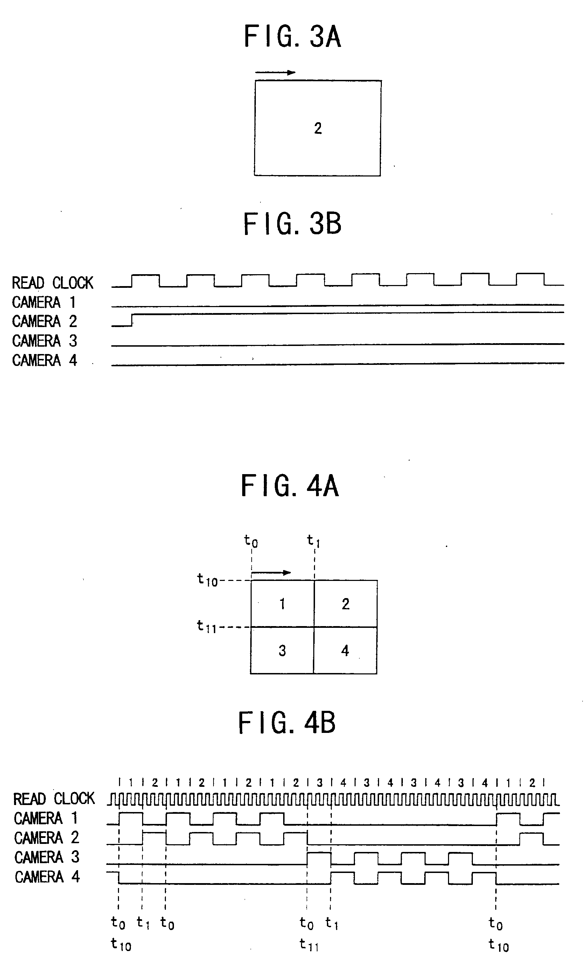

A description will now be given of four sample edited composite images, with reference to FIGS. 3A and 3B, 4A and 4B, 5A and 5B, and 6A and 6B.

FIGS. 3A and 3B are diagrams illustrating a first sample composite image edited using one embodiment of the present invention, in which FIG. 3A shows the composite image formed by image signals of individual cameras and FIG. 3B shows a timing chart of same. In this case, it is only the second camera, that is, camera 12b, that is being recorded.

In this case, the input comes from the second camera only, that is, from camera 12b only, so the control signals from the editing component 30 determine that the frame switch 24 is fixed on the input line from camera 12b only. It should be noted that a normal image size, that is, a full size, is selected as the camera image size unless the camera image size is specifically delineated.

FIGS. 4A and 4B are diagrams illustrating a second sample composite image edited by one embodiment of the present invention, in which FIG. 4A shows the composite image formed by image signals of individual cameras and FIG. 4B shows a timing chart of same. The drawing illustrates a case in which the image (frame) of the composite image (that is, the composite image signal) is divided into four regions, with the images (image signals) of the cameras 12a-12d positioned in each respective region.

Thus, for example, when under normal conditions the image size of the image signals of each of the individual cameras 12a-12d is composed of 480 X 640 pixels, in FIG. 4A the image size of the composite image signal becomes 960 x 1280 pixels, amounting to four times the normal amount of information. Therefore in order to read the image signals from all four cameras 12a-12d within a predetermined time period used to process a single frame composite image signal, the read clock rate is in this case increased to four times the normal rate.

The image signals of each individual frame memory components 22a-22d are read out in units of one line at a time in a horizontal line direction, with the composite image composed by controlling the timing of this read-out.

That is, in the timing chart, when the first horizontal line of the image signal of the first camera 12a is read out, the frame switch 24 switches and the first horizontal line of the image signal of the second camera 12b is read out. Next, the frame switch 24 once again switches so as to read the second horizontal line of the image signal from the first camera 12a, and the frame switch 24 switches yet again to read the second horizontal line from the second camera 12b.

In such manner, after the last horizontal line of the image signal of the second camera 12b is read out, the frame switch 24 switches so as to read the first horizontal line of the image signal of the third camera 12c. Thereafter, in the same manner as with each of the image signals of the first camera 12a and the second camera 12b, each of the horizontal lines of the image signals of the third camera 12c and the fourth camera 12d are read alternately. Then, the image signals of all the cameras 12a-12d are read out within the predetermined time period for processing a single frame image and a composite image is formed.

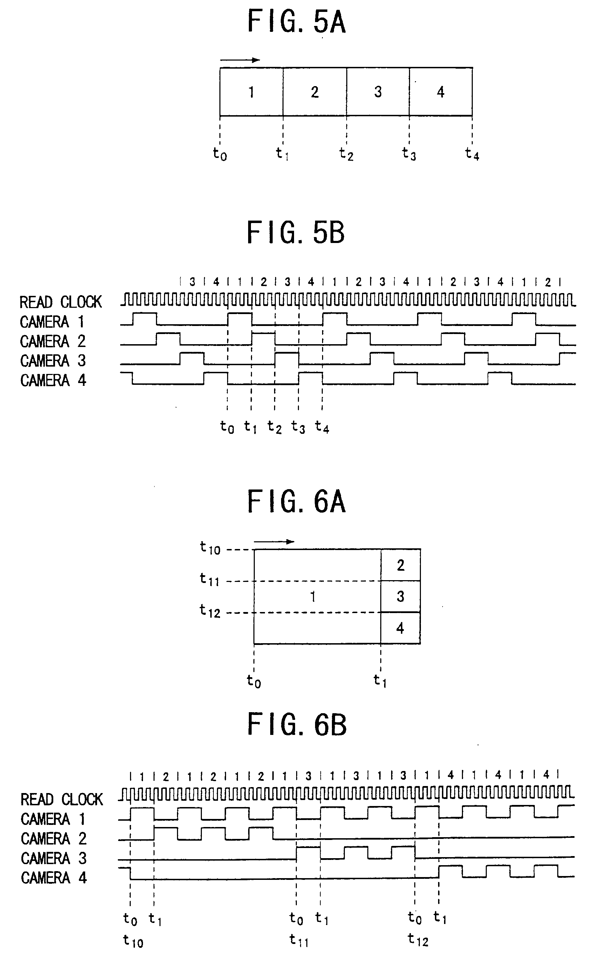

FIGS. 5A and 5B are diagrams illustrating a third sample composite image edited by one embodiment of the present invention, in which FIG. 5A shows the composite image formed by image signals of individual cameras and FIG. 5B shows a timing chart of same.

In this case, too, as with the case depicted in FIGS. 4A and 4B, the amount of composite image signal information is four times the normal amount, so the read clock rate is set to four times the normal rate.

In the timing chart, after the first horizontal lines of the image signals have been read in sequence from the first horizontal line of the image signal of the first camera 12a to the first horizontal line of the image signal of the fourth camera 12d, the second horizontal lines are read in sequence from the second horizontal line of the image signal of the first camera 12a to the second horizontal line of the image signal of the fourth camera 12d. The read continues in like manner until the last horizontal line from each of the image signals of each of the cameras is read out to form a composite image signal.

FIGS. 6A and 6B are diagrams illustrating a fourth sample composite image edited by one embodiment of the present invention, in which FIG. 6A shows the composite image formed by image signals of individual cameras and FIG. 6B shows a timing chart of same.

In this case, too, in order to form an image from the four cameras 12a through 12d, the read clock rate is set to four times the normal rate. The number of pixels in the images of each of the cameras 12a-12d is the same, so the speed with which image signals of each of the cameras 12a-12d is read is the same as well.

The timing control sequence of the frame switch 24 is the same as that for the other examples described above, so a detailed description thereof will be omitted.

The size of each image signal, in other words, the image signal resolution adjustment, is carried out by the image processing component 28. Based on the image size information and image placement information as determined by the editing component 30, the image processing component 28 processes the images signals of the cameras 12a-12d supplied via the frame switch 24 and adjusts the resolution so that the image signal corresponds to the selected image size.

In the case depicted in FIGS. 6A and 6B, the process shown is that of reducing the resolution of the image signals of the cameras 12a-12d.

The above description pertains to the process of recording. The following description pertains to the process of reproducing the images of the four cameras 12a-12d from the compression coded image signal recorded in the storage unit 18.

The compression coded image signal as a composite image signal is read from the recording medium of the storage unit 18 by the read-out component 32.

The read compression coded image signal is then decoded by the decoding component 34.

Then, the frame selection component 36 acquires only that image signal which is arbitrarily selected from among the decoded composite image signals and writes same to the frame memory unit 38. Thereafter the image signals are displayed on the display monitor 42 via the D/A converter 40. It should be noted that the image displayed at this time is a moving image, so anything happening in range of the camera can be observed.

As can be appreciated by those skilled in the art, by providing only a single frame memory unit the composite image can be written directly as is without division to such frame memory unit, with the result that images from all the cameras can be displayed on a single display monitor at once. Additionally, by providing four frame memory units (as with the embodiments described above) the image signal is divided into an image signal for each of the cameras by the frame selection component, written into each of the frame memory units provided for each respective image signal and displayed either selectively at a single display monitor or in an arbitrary sequence involving each of the cameras. Alternatively, a plurality of monitors may be provided and images of each camera displayed thereon.

According to the above-described embodiments of the present invention, a plurality of image signals from a plurality of cameras can be optimally compression coded because there is a high degree of correlation between successive individual frames of the composite image signal so generated. In this case, each of the plurality of cameras acquires a different image from any of the others, so the conventional JPEG standard of encoding is unable to record a moving picture efficiently under such conditions.

Additionally, the above-described embodiments of the present invention employ an editing component, so a desired image signal can be selected from among a plurality of image signals and a composite image signal can be edited using adjusted image size and resolution.

The above description is provided in order to enable any person skilled in the art to make and use the invention and sets forth the best mode contemplated by the inventors of carrying out the invention.

The present invention is not limited to the specifically disclosed embodiments, and variations and modifications may be made without departing from the scope and spirit of the present invention.

The present application is based on Japanese Priority Application No. 2000-202255, filed on July 4, 2000, the entire contents of which are hereby incorporated by reference.

## Claims

1. An image processing apparatus (10) **characterized by** having:
an image composition component (14) that combines a plurality of image signals to obtain a single composite image signal; and
an image compression coding component (16) that compresses and encodes the single composite image signal so as to obtain a compression coded image signal.

2. The image processing apparatus (10) as claimed in claim 1, further **characterized by** having an editing component (30) that supplies editing control signal to the image composition component (14) in order to edit the plurality of image signals.

3. The image processing apparatus (10) as claimed in claim 2, **characterized in that** the image composition component (14) has:
a plurality of memory components (22a, 22b, 22c, 22d) for storing each of the plurality of image signals;
an image signal switching component (24) for selectively switching the image signals to be input into the plurality of memory components (22a, 22b, 22c, 22d);
a read control component (26) that supplies a read control signal to the plurality of memory components (22a, 22b, 22c, 22d) so as to read out image signals stored therein; and
an image processing component (28) for processing the image signals read out from the plurality of memory components (22a, 22b, 22c, 22d) using the editing control signal from the editing component (30).

4. The image processing apparatus (10) as claimed in claim 3, **characterized in that** the read control component (26) supplies a read clock signal to the plurality of memory components (22a, 22b, 22c, 22d) using the editing control signal from the editing component (30), the read clock signal corresponding to a multiple of the plurality of image signals needed to obtain the composite image signal.

5. The image processing apparatus (10) as claimed in claim 3, **characterized in that** the image signal switching apparatus (24) changes the image signals input into the memory components (22a, 22b, 22c, 22d) with each horizontal line of each image signal that forms the single composite image signal using the editing control signal from the editing component (30).

6. The image processing apparatus (10) as claimed in claim 3, **characterized in that** the image signal switching component (24) adjusts a size of an image corresponding to the image signal supplied from the image signal switching component (24) using the editing control signal from the editing component (30).

7. An image recording apparatus **characterized by** having:
an image composition component (14) that combines a plurality of image signals to obtain a single composite image signal;
an image compression coding component (16) that compresses and encodes the single composite image signal to obtain a compression coded image signal;
a plurality of cameras (12a, 12b, 12c, 12d) for obtaining the plurality of image signals; and
an image recording component (18) that records the compression coded image signal onto a recording medium.

8. An image reproduction apparatus for reproducing compression coded image signals recorded on a recording medium by an image recording component (18) using a plurality of cameras (12a, 12b, 12c, 12d) for obtaining a plurality of image signals, the image reproduction apparatus **characterized by** having:
a reproduction component (32) for reading the compression coded image signal from the recording medium;
a decoding component (34) for decoding the composite image signal from the compression coded image signal;
an image selection component (36) that selects the image signal from the composite image signal so as to obtain a selected image signal;
a selected image signal storage component (38) that stores the selected image signal; and
an output component (40) that outputs the selected image signal to a display component (42).
